# EUROPEAN PATENT APPLICATION

(11) **EP 4 548 784 A1**
(43) Date of publication of application: **07.05.2025**
(21) Application number: 24209864.8
(22) Date of filing: 30.10.2024
(51) Int. Cl.: A24C 5/00, B65B 19/00, A24C 3/00, H02J 9/00, H02J 1/14, H02J 3/32

(54) **PROCESSING PLANT FOR THE PRODUCTION OF ARTICLES AND, PREFERABLY, SMOKING ARTICLES**

(30) Priority: 31.10.2023 IT 202300022959
(71) Applicant: G.D S.p.A., 40133 Bologna (IT)
(72) Inventor: LANZARINI, Luca, 40133 BOLOGNA (IT)
(74) Representative: Studio Torta S.p.A.

(57) **Abstract**

Processing plant (1) for the production of articles and having: a plurality of machines (2), each comprising: a frame (4), a plurality of operating members (5) supported by the frame (4) and a plurality of actuator devices (6), which are supported by the frame (4), are coupled to respective operating members (5) and use electrical energy; at least one electrical line (7), which powers the machines (2); and a plurality of storage devices (9), each of which is configured to store electrical energy, is coupled to a respective machine (2) and is configured both to exchange electrical energy with the electrical line (7) and to exchange electrical energy with the actuator devices (6) of the respective machine (2).

## Description

### CROSS-REFERENCE TO RELATED APPLICATIONS

This patent application claims priority from Italian patent application no. 102023000022959 filed on October 31, 2023, the entire disclosure of which is incorporated herein by reference.

### TECHNICAL FIELD

The present invention relates to a processing plant for the production of articles.

The present invention finds advantageous application in a plant for the production and packaging of cigarettes, to which the following disclosure will refer without thereby loosing generality.

### PRIOR ART

A plant for the production and packaging of cigarettes, for example of the type described in patent application EP1587380A1, comprises a production line formed by a plurality of machines wherein an output of a previous machine is connected to an input of a subsequent machine. The production line normally comprises, from top to bottom, a cigarette manufacturing machine (which constitutes the beginning of the production line and produces cigarettes without filters), a filter-applying machine (which receives the cigarettes without filters from the manufacturing machine and applies a filter to each cigarette), a packing machine (which receives the cigarettes with filters from the filter-applying machine and packages them in respective packets), a cellophane-wrapping machine (which receives the packets of cigarettes from the packing machine and applies a corresponding transparent plastic coating to each packet of cigarettes), a cartoning machine (which receives the packets of cigarettes provided with the overwrap from the cellophane-wrapping machine and packages them in respective cartons), and a cartoning machine (which constitutes the end of the production line and receives the cartons of packets of cigarettes from the cartoning machine and packages them in corresponding boxes).

Other examples of a plant for the production and packaging of cigarettes are described in patent applications WO03074361A1, EP1041006A2, DE3519580C1, EP1346651A1, US20080289642A1, EP0882411A1, EP2121449A1, EP1273541A2, US5209247A1, EP2004530, EP0261508A2 and EP0347586A1.

In recent years, there has been an increasing demand to reduce the environmental impact of processing plants and for this reason, buildings that house processing plants are often provided with an electrical energy generation system that uses a renewable source and the choice typically turns to the use of photovoltaic panels. However, photovoltaic panels only generate electrical energy when exposed to sunlight and therefore only generate electrical energy during daylight hours (and obviously more electrical energy is generated the more intense the sunlight is). To try to compensate for the extreme variability of the electrical power generated by photovoltaic panels, an electrical energy storage system is used that stores the excess energy generated during the day and releases electrical energy during the night hours or during periods of low solar production; overall, an electrical energy storage system combined with photovoltaic generation provides greater control, flexibility and efficiency in the use of electrical energy generated by the sun, increases energy resilience and contributes to a more sustainable energy future.

However, installing an adequately performing electrical energy storage system in a processing plant can be problematic as it requires relatively large space that may be difficult to find (also due to the weight of the storage system) and also has a suboptimal energy efficiency as the electrical energy storage system is relatively far from the electrical energy consumers.

Patent application WO2018069882A1 describes an industrial system comprising: an alternating current power line connectable to a power source, an ac/dc converter communicating with the power source through the alternating current power line, a direct current power line downstream of the ac/dc converter, a critical load supplied by the direct current power line and comprising at least one dc/ac converter and an electric motor driven by the dc/ac converter; and an energy storage system that begins operating in the event of a failure of the alternating current power line and comprising a flywheel, an electric machine connected to the flywheel, a bidirectional ac/dc converter interposed between the electric machine and the direct current power line. The electric machine functions as a motor that rotates the flywheel when the alternating current power line is in service and functions as a generator, driven by the inertia of the flywheel, when the alternating current power line is out of service.

### DESCRIPTION OF THE INVENTION

The object of the present invention is to provide a processing plant for the production of articles that is free from the drawbacks described above and is, at the same time, easy and inexpensive to produce.

According to the present invention, a processing plant for the production of articles is provided, as claimed in the attached claims.

The claims describe preferred embodiments of the present invention and form an integral part of the present description.

### BRIEF DESCRIPTION OF THE DRAWINGS

The present invention will now be described with reference to the attached drawings, which illustrate a non-limiting embodiment thereof, wherein:
- Figure 1 is a schematic and plan view of a processing plant for the production and packaging of cigarettes and made according to the present invention;
- Figure 2 is a schematic and perspective view of a machine of the processing plant of Figure 1; and
- Figure 3 is a schematic view of an electrical system of a machine of the processing plant of Figure 1.

### PREFERRED EMBODIMENTS OF THE INVENTION

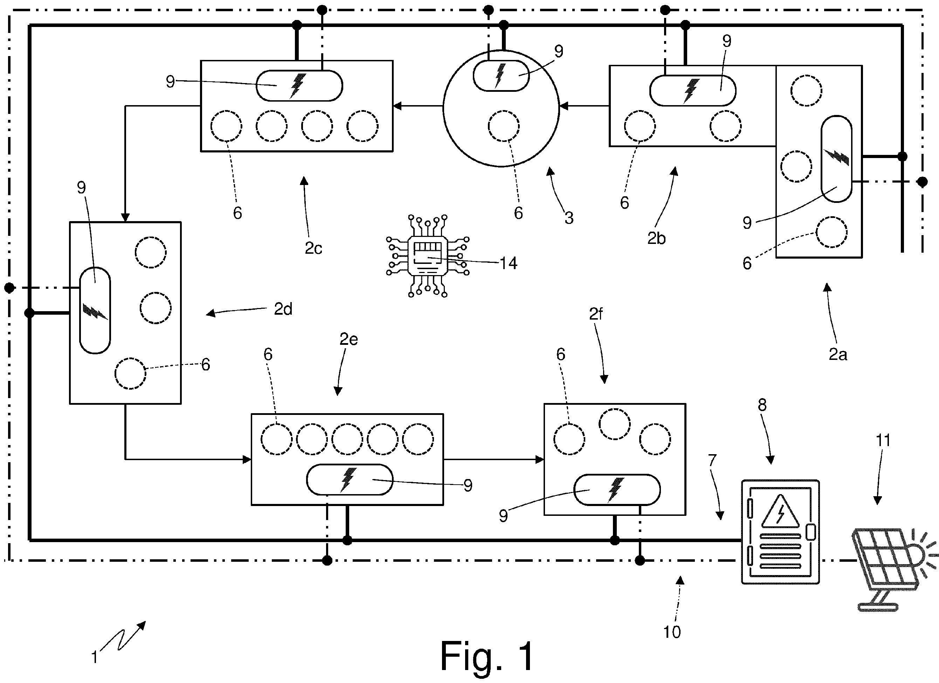

In Figure 1, number 1 denotes as a whole a processing plant for the production and packaging of cigarettes.

The processing plant 1 comprises (at least) a production line formed by a plurality of machines 2 in which an output of a previous machine 2 is connected to an input of a subsequent machine 2 (possibly with the interpretation of a compensating storage unit that allows to temporarily compensate the differences in speed between the machines 2).

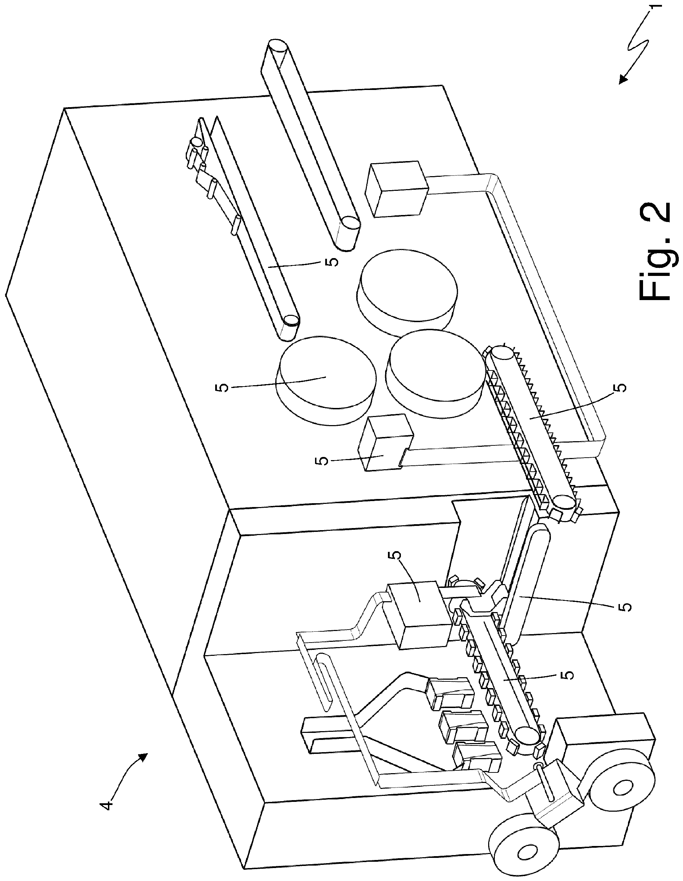

In particular, the processing plant 1 comprises, from top to bottom, a manufacturing machine 2a producing tobacco-based aromatic pieces (which constitutes the beginning of the production line), an assembly or filter-applying machine 2b (which receives the aromatic pieces from the manufacturing machine 2a and produces the cigarettes by assembling the aromatic pieces with the respective filter pieces), a packaging machine 2c (which receives the cigarettes from the assembly machine 2b and packages them into respective packets of cigarettes and is illustrated as an example in Figure 2), a cellophane-wrapping machine 2d (which receives the packets of cigarettes from the packaging machine 2c and applies a corresponding transparent plastic coating to each packet of cigarettes 1), a cartoning machine 2e (which receives the packets of cigarettes provided with the overwrap from the cellophane-wrapping machine 2d and packages them into respective cartons), and a cartoning machine 2f (which constitutes the end of the production line and receives the cartons of packets of cigarettes from the cartoning machine 2e and packages them in corresponding boxes).

Between the assembly or filter-applying machine 2b and the packaging machine 2c a compensating storage unit 3 is provided, which allows to temporarily compensate the differences in speed between the machines 2b and 2c.

As better illustrated in Figure 2, each machine 2 comprises a frame 4 (base) that rests on the ground and supports a plurality of operating members 5 (which perform the actual processing of the materials leading to the final product); generally, the frame 4 has a vertical front wall on which most of the operating members 5 are mounted. Each machine 2 also comprises a plurality of actuator devices 6 (schematically illustrated in Figure 1) that are carried by the frame 4, are coupled to respective operating members 5 and use electrical energy to perform operations (such as driving a movement, heating, and taking measurements).

As illustrated in Figure 1 and similarly to the machines 2, the storage unit 3 also comprises operating members 5 coupled to respective actuator devices 6.

As illustrated in Figure 1, the processing plant 1 comprises (at least) an electrical line 7 that operates in alternating current, supplies all the machines 2 and the storage unit 3 and originates from a main electrical panel 8.

The processing plant 1 comprises, furthermore, a plurality of storage devices 9, each of which is configured to store electrical energy, is coupled to a respective machine 2 (or to the respective storage unit 3) and is configured both to exchange electrical energy with the electrical line 7 and to exchange electrical energy with the actuator devices 6 of the respective machine 2 (or of the respective storage unit 3). That is, each storage device 9 is configured to receive electrical energy from electrical line 7 (when there is an *"excess"* of electrical power in the electrical line 7) and to release electrical energy to the electrical line 7 (when there is a *"shortage"* of electrical power in the electrical line 7); furthermore, each storage device 9 is configured to release electrical energy to actuator devices 6 (when actuator devices 6 operate as motors transforming electrical energy into mechanical energy) and to receive electrical energy from actuator devices 6 (when actuator devices 6 operate, during braking, as generators transforming mechanical energy into electrical energy).

According to a possible embodiment, the storage devices 9 are housed in the frames 4 of the respective machines 2 and of the storage unit 3 (namely, the storage devices 9 are inside the frames 4 of the respective machines 2 and of the storage unit 3) and/or the storage devices 9 are housed above the frames 4 of the respective machines 2 and of the storage unit 3 (namely, the storage devices 9 are supported on the upper wall of the frames 4 of the respective machines 2 and of the storage unit 3); in this way, the presence of the storage devices 9 does not increase the overall dimensions of the machines 2 and of the storage unit 3. Alternatively, the storage devices 9 could be arranged next to the frames 4 of the respective machines 2 and of the storage unit 3.

According to a preferred embodiment, the storage devices 9 use electrochemical cells; however, according to other embodiments, the storage devices 9 can use other methods to store energy.

According to a possible embodiment illustrated in the attached figures, the processing plant 1 comprises an electrical line 10 that is independent of and separate from the electrical line 7, operates in direct current and connects the storage devices 9 to one another. The electrical line 10 allows the storage devices 9 to exchange electrical energy in direct current with one another and therefore without having to go through a double conversion (from direct current to alternating current and therefore from alternating current to direct current).

The electrical line 10 can be connected to a system 11 for the generation of electrical energy using renewable sources, such as an electrical energy generation system using photovoltaic panels or an electrical energy generation system using wind generators.

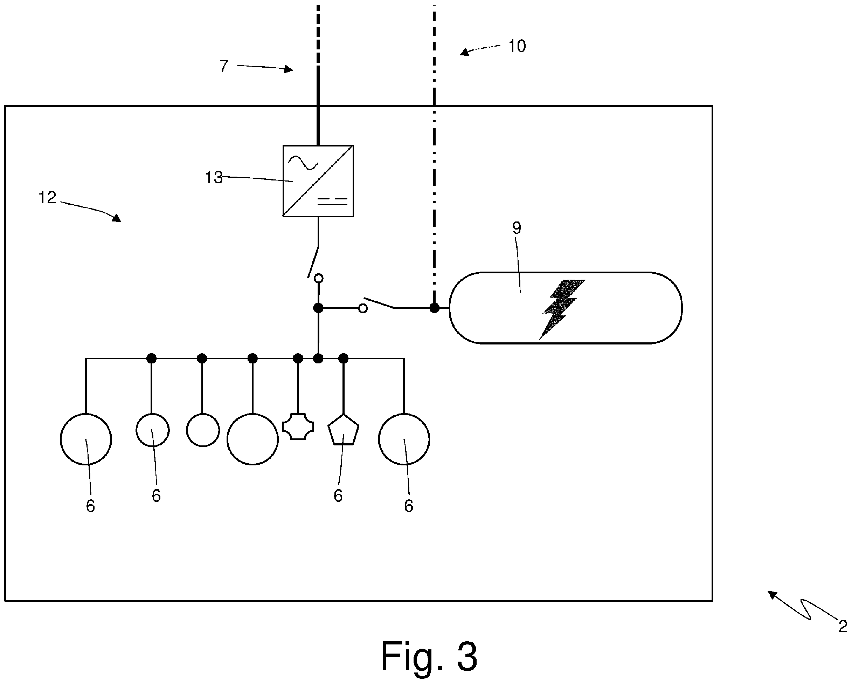

As illustrated in Figure 3, each machine 2 (and also the storage unit 3) comprises an electrical power system 12 that is connected to the alternating current electrical line 7 by means of the interposition of a bidirectional alternating-direct current converter 13 (namely, capable of both converting alternating current electrical energy into direct current electrical energy and converting direct current electrical energy into alternating current electrical energy). The storage device 9 is connected to the direct current side of the electrical power system 12 (namely, downstream of the converter 13) and is also connected to the alternating current electrical line 10.

As illustrated in Figure 1, a control unit 14 is also provided, which manages the flow of electrical energy into and out of the storage devices 9: typically the storage devices 9 are activated to store electrical energy when there is an *"excess"* of electrical power and are activated to release electrical energy when there is a *"shortage"* of electrical power; the transfer of electrical energy can occur between (at least) one storage device 9 and the alternating current electrical line 7, it can occur (alternatively or simultaneously) directly between (at least) two storage devices 9 through the direct current electrical line 10 and it can occur (alternatively or simultaneously) between (at least) one storage device 9 and the generation system 11 through the direct current electrical line 10.

By way of example, a machine 2 (and the storage unit 3) can have a nominal power of the order of 10-20 kW while a storage device 9 can have a capacity to store electrical energy equal to at least one hour of operation of the respective machine 2 (or the respective storage unit 3) at the nominal power (and therefore corresponding to some hours of actual operation) and therefore can have a capacity to store electrical energy of the order of 10-50 kWh.

According to a possible embodiment, the electrical line 7 and/or the electrical line 10 (if provided) can be made to run along the conveyors that connect the machines 2 (and the storage unit 3) to one another to transfer the products from a previous machine 2 to the subsequent machine 2.

In the embodiment illustrated in the attached figures, the processing plant 1 has a single production line; according to other embodiments not illustrated, the processing plant 1 can comprise a plurality of production lines, each generally comprises its own electrical line 7 that originates from the main electrical panel 8. In the case of multiple production lines, the exchange of electrical energy between the production lines is normal since on average there is (often) at least one production line on hold (due to shift changes, maintenance or cleaning, brand changes, etc.).

The embodiments described here can be combined with one another without departing from the scope of protection of the present invention.

The processing plant 1 described above has numerous advantages.

First of all, the processing plant 1 described above allows for a substantial increase in long-term energy efficiency since the capacity to store electrical energy is distributed exactly where the electrical energy is consumed (minimizing the transport and conversion of electrical energy which inevitably leads to energy loss).

Furthermore, the processing plant 1 described above allows for a high capacity to store electrical energy with virtually no increase in actual size since the free space in the machines 2 (and in the storage unit 3) is used to house the storage devices 9.

It is also important to note that each machine 2 (and the storage unit 3) incorporates a capacity to store a portion of the electrical energy required for its operation; therefore, when a machine 2 (or storage unit 3) is added or removed, the capacity to store electrical energy of the processing plant 1 is consequently increased or decreased.

Finally, the processing plant 1 described above is simple to implement.

### LIST OF REFERENCE NUMBERS OF THE FIGURES

1 processing plant
2 machines
3 storage unit
4 frame
5 operating members
6 actuator devices
7 electrical line
8 main electrical panel
9 storage devices
10 electrical line
11 generation system
12 electrical power system
13 converter
14 control unit

## Claims

1. A processing plant (1) for the production of articles and comprising:
a plurality of machines (2), each comprises: a frame (4), a plurality of operating members (5) supported by the frame (4) and a plurality of actuator devices (6), which are supported by the frame (4), are coupled to respective operating members (5) and use electrical energy; and
at least one first electrical line (7), which powers the machines (2);
the processing plant (1) is **characterised in that** it comprises a plurality of storage devices (9), each of which is configured to store electrical energy, is coupled to a respective machine (2) and is configured both to exchange electrical energy with the first electrical line (7) and to exchange electrical energy with the actuator devices (6) of the respective machine (2).

2. The processing plant (1) according to claim 1, wherein each storage device (9) is configured to receive electrical energy from the first electrical line (7) and to release electrical energy to the first electrical line (7).

3. The processing plant (1) according to claim 1 or 2, wherein each storage device (9) is configured to release electrical energy to the actuator devices (6) and to receive electrical energy from the actuator devices (6).

4. The processing plant (1) according to claim 1, 2 or 3, wherein the first electrical line (7) operates in alternating current.

5. The processing plant (1) according to one of the claims from 1 to 4 and comprising a second electrical line (10), which is independent of and separate from the first electrical line (7) and connects the storage devices (9) to one another.

6. The processing plant (1) according to claim 5, wherein the first electrical line (7) operates in alternating current and the second electrical line (10) operates in direct current.

7. The processing plant (1) according to claim 5 or 6, wherein the second electrical line (10) can be connected to a system (11) for the generation of electrical energy by using renewable sources.

8. The processing plant (1) according to claim 5, 6 or 7, wherein the second electrical line (10) is configured to allow the storage devices (9) to exchange electrical energy in direct current with one another.

9. The processing plant (1) according to one of the claims from 5 to 8 and comprising a control unit (14) configured to manage the flow of electrical energy into and out of the storage devices (9) so that the storage devices (9) are activated to store electrical energy when there is an excess of electrical power and are activated to release electrical energy when there is a shortage of electrical power.

10. The processing plant (1) according to claim 9, wherein the transfer of electrical energy can occur directly between at least two storage devices (9) through the second direct current electrical line (10).

11. The processing plant (1) according to one of the claims from 5 to 10, wherein the second electrical line (10) runs along conveyors that connect the machines (2) to one another to transfer the products from a previous machine (2) to a subsequent machine (2).

12. The processing plant (1) according to one of the claims from 1 to 10, wherein each storage device (9) has a capacity to store electrical energy equal to at least one hour of operation of the respective machine (2).

13. The processing plant (1) according to one of the claims from 1 to 12, wherein at least one storage device (9) is housed in the frame (4) of the respective machine (2).

14. The processing plant (1) according to one of the claims from 1 to 12, wherein at least one storage device (9) is housed above the frame (4) of the respective machine (2).

15. The processing plant (1) according to one of the claims from 1 to 14, wherein the machines (2) are configured to process smoking articles.
